# EUROPÄISCHE PATENTSCHRIFT

(11) **EP 1 418 400 B1**
(45) Veröffentlichungstag und Bekanntmachung des Hinweises auf die Patenterteilung: **06.05.2009**
(21) Anmeldenummer: 04002747.6
(22) Anmeldetag: 05.03.1998
(51) Int. Cl.: G01B 11/30, G01B 11/24, B21B 38/02, G01B 11/25

(54) **Walzstrasse**
Rolling mill
Laminoir

(30) Priorität: 11.03.1997 DE 19709992
(43) Veröffentlichungstag der Anmeldung: 12.05.2004
(62) Teilanmeldung aus: 98103890.4
(73) Patentinhaber: VDEh-Betriebsforschungsinstitut GmbH, 40237 Düsseldorf (DE); ThyssenKrupp Steel AG, 47166 Duisburg (DE)
(72) Erfinder: Müller, Ulrich, 40789 Monheim (DE); Peuker, Gustav, 41066 Mönchengladbach (DE); Sonnenschein, Detlef, 40822 Mettmann (DE); Winter, Detlef, 38527 Meine (DE); Degner, Michael, 44229 Dortmund (DE); Thiemann, Gerd, 44879 Bochum (DE)
(74) Vertreter: König, Gregor Sebastian

(56) Entgegenhaltungen:
- DE-A- 2 013 867
- DE-A- 3 721 746
- FR-A- 2 725 512
- US-A- 5 309 222
- US-A- 5 367 378
- US-A- 5 488 478

## Beschreibung

Die Erfindung betrifft eine Walzstraße.

Das bei Kaltbandstraßen übliche Kontaktmessen ist im Warmbandbereich aufgrund der hohen Temperatur des Bandes - von etwa 1000°C - nur mit erheblichem Instandhaltungsaufwand möglich. Ein Kontaktmessen ist auch an den Stirnflächen eines in einem Haspel entstehenden Coils nicht möglich. Es ist daher schwierig, wenn nicht gar unmöglich, Band so zu haspeln, dass im Coil jede Windung exakt über der vorausgehenden liegt und sich so plane Stirnflächen ergeben. Aber auch in Kaltbandstraßen wird versucht, das Kontaktmessen zu vermeiden, da die mechanischen Messelemente nur eine begrenzte Lebensdauer besitzen.

Die Bandplanheit wird daher vorzugsweise berührungslos gemessen. Bekannt ist beispielsweise ein Messen von Planheitsabweichungen mit Hilfe von auf das Band projizierten Lichtpunkten. Die Raumlage des vorzugsweise mit Hilfe eines Laserstrahls auf der Bandoberfläche erzeugten Lichtpunkts wird mit einem Abstandssensor erfasst.

Die beiden ebenen Ortskoordinaten eines bestimmten Oberflächenpunktes sind durch die relative Lage zwischen Abtast- bzw. Beleuchtungsstrahl und der Bandoberfläche bekannt. Die Höhenkoordinate des Oberflächenpunktes, der aktuell vermessen wird, erfasst ein ortsempfindlicher Detektor. Mit der Höhenkoordinate verändert sich gleichzeitig die Position des Abbildungspunktes auf dem Sensor.

Mit mehreren Strahlenquellen und Sensoren lässt sich so ein Planheitsbild über die gesamte Breite des Bandes erstellen, das sich aus den Messergebnissen der in bestimmten Abständen auf das Band projizierten Lichtpunkte zusammensetzt. Die zwischen den Lichtpunkten befindlichen Bereiche werden allerdings bei diesem Verfahren nicht erfasst und bilden bei einem fortlaufenden Band streifenförmige Messlücken, deren Planheit nicht ermittelt wird. Darüber hinaus kommt es dadurch zu Messfehlem, dass beispielsweise ein Flattern des Bandes messtechnisch als Bandunebenheit erfasst wird.

In der Automobilindustrie ist es bekannt, kleinere Oberflächen mit Hilfe der Moire-Technik zu vermessen. Dabei wird auf der Objektoberfläche ein Interferenzmuster mittels einer Lichtquelle erzeugt. Mit Hilfe einer CCD-Kamera (CCD = Charge-coupled-device) wird das Interferenzmuster erfasst. Die Kamera ist so angeordnet, dass sich ein Winkel zwischen der Lichtquelle der Oberfläche und der Kamera ergibt. Durch ein Referenzraster in der Bildebene entsteht durch Überlagerung des aufgenommenen Musters mit dem Referenzmuster ein sogenannter Moiré-Effekt. Aus den Moiré-Linien lassen sich die Höhendifferenzen quantitativ ermitteln.

Die Moiré-Technik liefert genauere Messergebnisse als das Messen mit Lichtpunkten; sie erfasst darüber hinaus im wesentlichen die gesamte Messfläche und vermeidet die oben erwähnten Messlücken. Der Einsatz, insbesondere in einer Warmbandstraße ist jedoch problematisch.

Um die Höhendifferenzen des Walzbandes quantitativ zu ermitteln, ist eine komplizierte Umrechnung der von der Kamera erfassten Muster erforderlich. Die als Moiré-Linien abgebildeten Höhendifferenzen lassen sich nicht in Echtzeit in quantitative Messwerte umrechnen.

In einer Walzstraße sind aber gerade schnelle Messergebnisse erforderlich, da die Messung sich sonst kaum für ein direktes Anpassen der Walzparameter zur Verbesserung der Planheit des durchlaufenden Bandes ausnutzen lässt. Für den industriellen Einsatz mangelt es darüber hinaus den feinen Interferenzmustern an Kontrast- und Intensitätsstärke.

Bei herkömmlichen Metallbandstraßen, bei denen die Bandplanheit nach einem der obenerwähnten Verfahren erfasst wird, findet keine Erfassung der Planheitsfehler aus der Kühlstrecke statt, was erhebliche Qualitätsverluste zur Folge haben kann.

Aus FR 2 725 512 A ist eine Walzstraße für ein Kaltband bekannt. Dieses Band wird einer Messvorrichtung für die Bandplanheit zugeführt. Diese eine Messvorrichtung besteht aus zwei Teileinheiten, nämlich einer Beleuchtungseinrichtung zur Erzeugung eines breiten Lichtbandes auf der Metallbandoberfläche und einer zweiten Teileinheit, nämlich einem Distanzmesser. Der Distanzmesser wird benötigt, um ein drei-dimensionales Bild der Bandoberfläche zu erzeugen.

Aus der US 5,488,478 ist eine Messvorrichtung für die Bandplanheit von Warmband bekannt. Diese Messvorrichtung ist im Auslauf der Fertigstaffel vorgesehen.

Der Erfindung liegt das Problem zugrunde, eine Walzstraße vorzuschlagen, die eine gute Regelung erlaubt.

Dieses Problem wird durch die Walzstraße des Anspruchs 1 gelöst. Vorteilhafte Ausgestaltungen der erfindungsgemäßen Walzstraße sind in den Unteransprüchen 2 bis 4 wiedergegeben.

Durch den Aufbau der erfindungsgemäßen Walzstraße können Veränderungen der Bandplanheit infolge des Bandabkühlens zwischen Fertigstaffel und Haspel erfasst und zur Planheitsregelung verwertet werden.

Die Messdaten lassen sich zur Regelung der Fertigstaffel, des Haspels und zur Steuerung der Kühlstrecke verwerten.

Messergebnisse, die eine Sollwertabweichung beinhalten, bewirken eine sofortige und aufeinander abgestimmte Anpassung der Parameter für die Fertigstaffel, die Kühlstrecke und den Haspel.

Bei der Walzstraße kann auf der Messoberfläche und/oder der Stirnfläche eines im Entstehen begriffenen Coils ein Linienmuster erzeugt werden, das Linienmuster mit einer das Linienmuster auflösenden Kamera erfasst und die erfassten Messdaten mit einer Referenzmessung verglichen werden. Mit Hilfe eines Prozessrechners können die Messergebnisse unmittelbar in Steuerungsparameter für die Fertigstraße und den Haspel umgesetzt und koordiniert.

Unter Messoberfläche ist hier die Oberfläche des Bandes oder die aus einer mehr oder minder großen Zahl von Windungen des Bandes bestehende Stirnfläche eines Coils beim Haspeln zu verstehen.

Ein Projektor kann durch Projektion, beispielsweise durch ein Dia, ein der Auflösung der Kamera entsprechendes Linienmuster auf der Bandoberfläche bzw. der Stirnfläche des Coils erzeugen. Der Projektor kann dabei oberhalb des Metallbandes angeordnet sein und projiziert das Linienmuster in einem Winkel zur Vertikalen auf die Oberfläche des Metallbandes, so dass sich die Linien vorzugsweise quer zur Bandoberfläche erstrecken und somit die ganze Bandbreite erfassen.

Eine CCD-Kamera mit einer Auflösung von beispielsweise acht Pixel pro Linie kann die quer über die Bandoberfläche verlaufenden Linien erfassen. Bei einer absoluten Bandplanheit entsteht ein gleichmäßiges Muster gerader Linien mit unverändertem Linienabstand.

Abweichungen der Bandoberfläche von der idealen Ebene bewirken eine Änderung des Linienabstandes im Bereich der Unebenheit. Diese Änderung kann die Kamera erfassen. Sie lässt sich rechnerisch durch einen Vergleich mit einem Idealmuster auf einfache Weise in Höhendifferenzen umrechnen.

In ähnlicher Weise wie beim Planheitsmessen am laufenden Band, lässt sich mit Hilfe des erfindungsgemäßen Messsystems die Planheit der Stirnflächen beim Haspeln überwachen bzw. gewährleisten. Die Stirnfläche des sich im Haspel aufbauenden Coils entspricht dabei der Bandoberfläche.

Ein solches System ermöglicht eine schnelle Ermittlung der tatsächlichen Höhendifferenzen der Bandoberfläche und erlaubt so eine Echtzeiterfassung fortlaufender Bandabschnitte. Dies hat den Vorteil, dass die Messergebnisse ein Anpassen der Walzparameter unmittelbar nach dem Auftreten einer Unebenheit erlauben.

Eine solche Messung kann unempfindlich gegen Verfälschungen der Messergebnisse sein. Solche Verfälschungen entstehen bei herkömmlichen Messsystemen beispielsweise infolge einer Bewegung der gesamten Bandoberfläche bezüglich der Höhenkoordinate (Flattern). Ferner ist es möglich, die Querwölbung des Bandes zu bestimmen. Konventionelle Messsysteme erfassen lediglich die Bandfaserlänge. Die Messlinien lassen sich zudem bezüglich ihrer Intensität und Liniendicke unterschiedlichen Bedingungen anpassen. Die Probleme der feinen intensitäts- und kontrastschwachen Moiré-Linien treten nicht auf.

Im folgenden wird die Erfindung anhand eines in der Zeichnung dargestellten Ausführungsbeispiels des näheren erläutert.

In der Zeichnung zeigen:

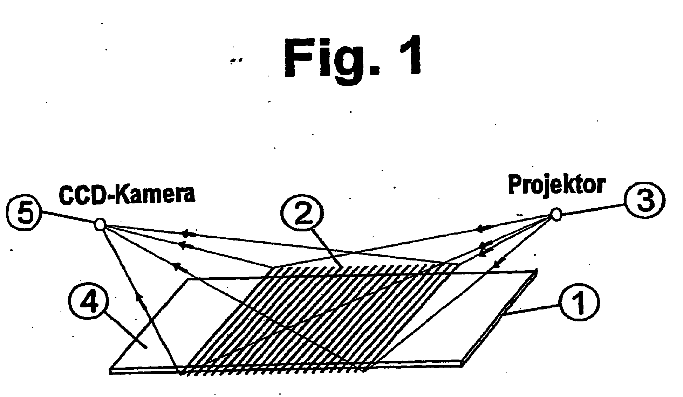

- Fig.1:: die Erzeugung und Erfassung der Messlinien auf einem Bandabschnitt;

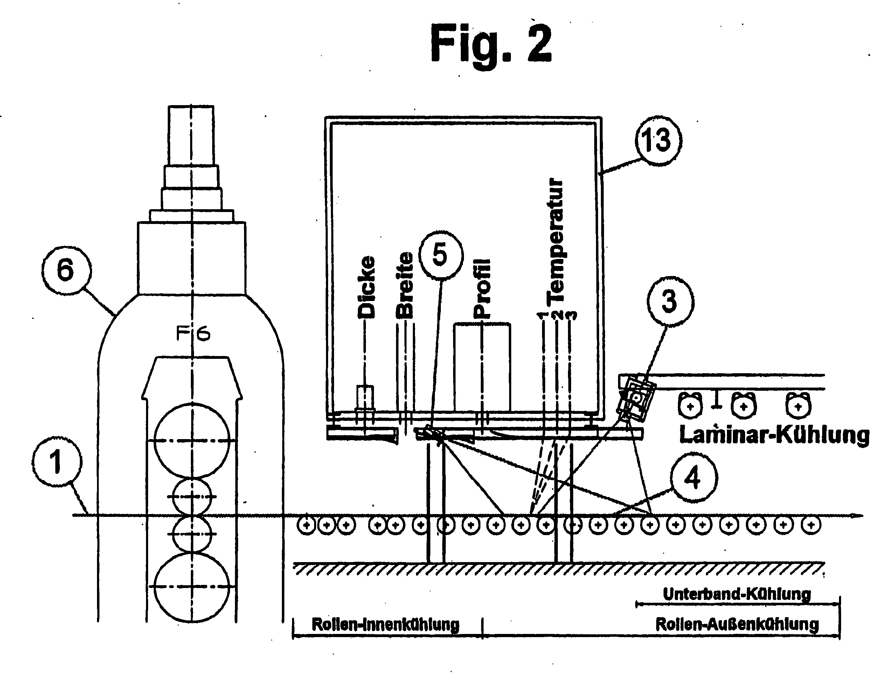

- Fig. 2:: die Anordnung eines Projektors und einer Kamera hinter einer Fertigstaffel;

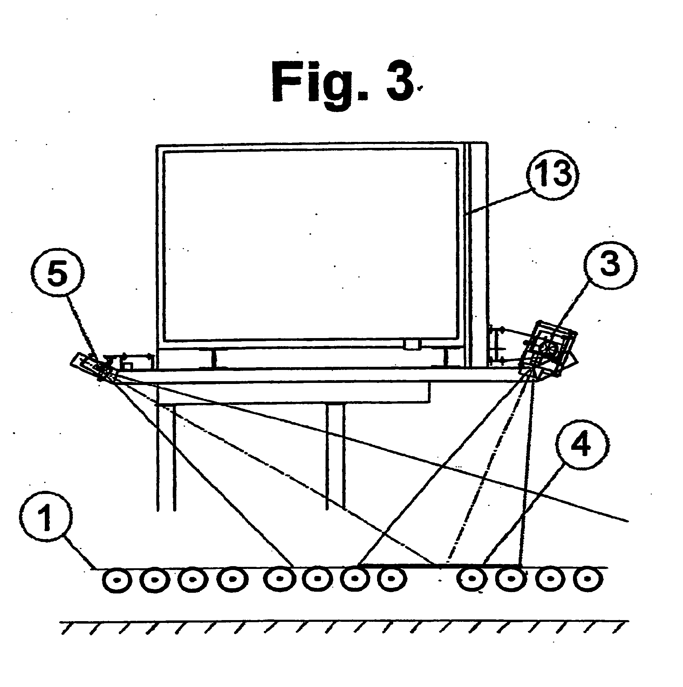

- Fig. 3:: die Anordnung des Projektors und der Kamera vor einer Haspelgrube;
- Fig. 4:: ein Blockdiagramm der Planheitsregelung.

Quer zum Band 1 verlaufende Messlinien 2 werden durch einen Projektor 3 auf der Mess- bzw. Bandoberfläche 4 erzeugt.

Die Messanordnung ist im Auslauf der Fertigstaffel 6 einerseits und vor dem Haspel 7 andererseits an einem Messhaus 13 angeordnet. Die CCD-Kamera 5 befindet sich auf der dem Haspel 7 abgewandten Messhausseite in einem wassergekühlten Gehäuse. Der Projektor 3 ist auf der dem Haspel 7 zugewandten Messhausseite angeordnet. Zur Wärmeabfuhr wird das Gehäuse mit Kühlluft beaufschlagt. Die Kühlung des Projektors 3 und der Kamera 5 ist zum Abführen der Eigenwärme und der von dem etwa 1000°C heißen Band 1 ausgehenden Wärmestrahlung erforderlich.

Die bezüglich der Bandlaufrichtung hintereinander angeordnete Kamera 5 und der Projektor 3 sind auf einen zwischen ihnen befindlichen Bandbereich ausgerichtet, auf dem das Linienmuster erzeugt und abgetastet wird. Als Projektor lässt sich beispielsweise eine Xenon-Lichtquelle einsetzen, die auch auf einer heißen Bramme ein gut lesbares Linienmuster erzeugt.

Unebenheiten auf der Bandoberfläche 4 bewirken einen unregelmäßigen Verlauf der Messlinien 2 bzw. deren Abweichung von der geometrischen Geraden.

Mit einer CCD-Kamera 5 werden die Messlinien 2 und damit auch deren durch Unebenheiten veränderter Verlauf erfasst. Das Messbild wird nach der Erfassung rechnerisch mit einem zuvor aufgenommenen Referenzmuster verglichen. Aus den Abweichungen ergeben sich unmittelbar die Höhendifferenzen und die Parameter für die Regelung der Fertigstraße.

Dadurch entsteht ein vollständiges Planheitsbild des sich in Pfeilrichtung bewegenden Bandes 1.

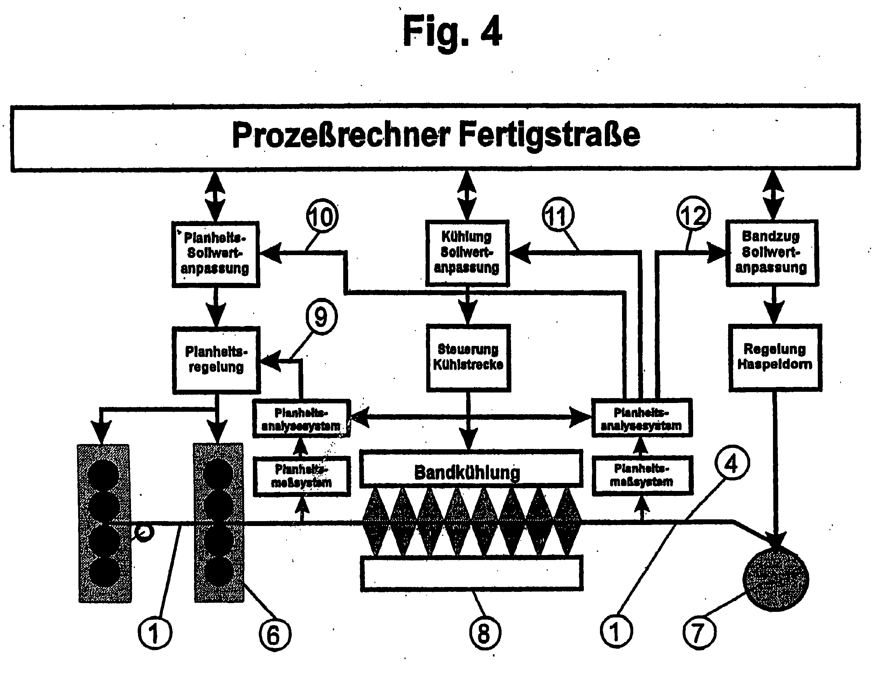

Aus dem Diagramm der Planheitsregelung (Fig. 4) ergibt sich der erfindungsgemäße Aufbau. Das Warmband 1 durchläuft die Fertigstraße 6 und die Bandkühlung 8 bis zum Haspel 7 in der Haspelgrube. Im Auslauf der Fertigstraße 6 wird die Planheit des Warmbandes erfasst, analysiert und zur Ansteuerung der letzten Gerüste der Fertigstaffel (Walzenbiegung und Schwenken) verwertet. Diese innere Planheits-Regelschleife 9 wird durch eine äußere Planheits-Regelschleife 10 ergänzt. Durch eine Messung der Bandplanheit hinter der Bandkühlung 8 vor dem Haspel 7 wird die äußere Planheits-Regelschleife 10 zur Anpassung des Sollwertes der inneren Regelschleife aufgebaut.

Mit den hinter der Bandkühlung erfassten Messwerten wird ferner eine erste unterlagerte Regelschleife 11 erzeugt, die eine Anpassung des Sollwertes für die Kühlstrecke 8 erlaubt, und eine zweite unterlagerte Regelschleife 12, die eine Anpassung des Sollwertes für den Haspelzug 7 erlaubt, aufgebaut.

Insgesamt lässt sich die erfindungsgemäße Erfassung und Regelung beim Warmwalzen effektiv verwenden, um eine hohe Bandplanheit bei den in Warmbandstraßen üblichen hohen Fertigungsgeschwindigkeiten bis 25 m/s zu erreichen.

## Patentansprüche

1. Walzstraße mit einer Fertigstaffel (6), einer Bandkühlung (8), einem Haspel (7) und einer vor sowie einer hinter der Bandkühlung angeordneten Meßvorrichtung für die Bandplanheit, die mit der Regelung der Fertigstaffel (6), der Bandkühlung (8) und des Haspels (7) gekoppelt ist.

2. Walzstraße nach Anspruch 1, bei der im Auslauf der Fertigstaffel (6) die Planheit des Bandes (1) erfaßt, analysiert und zum Ansteuern der letzten Gerüste der Fertigstaffel verwertet und dabei durch die Meßwerte der Planheitsmessung hinter der Bandkühlung (8) und vor dem Haspel (7) modifiziert wird.

3. Walzstraße nach einem der Ansprüche 1 bis 2, bei der mit den hinter der Bandkühlung (8) erfaßten Meßwerten eine erste unterlagerte Regelschleife (11) erzeugt wird, die ein Anpassen des Sollwertes für die Kühlstrecke (8) erlaubt.

4. Walzstraße nach einem der Ansprüche 1 bis 3, bei der mit den hinter der Bandkühlung (8) erfaßten Meßwerten eine zweite unterlagerte Regelschleife (12) erzeugt wird, die ein Anpassen des Sollwertes für den Haspelzug (7) erlaubt.

## Claims

1. Rolling mill having a finishing train (6), a strip cooling section (8), a coiler (7) and a measuring device arranged upstream and downstream of the strip cooling section to measure the evenness of the strip, which is connected to the control of the finishing train (6), the strip cooling section (8) and the coiler (7).

2. Rolling mill according to Claim 1, in which at the exit point of the finishing train (6) the evenness of the strip (1) is measured, analysed and utilized to actuate the last stands of the finishing train and is thereby modified by means of the measured values of the measurement of evenness downstream of the strip cooling section (8) and upstream of the coiler (7).

3. Rolling mill according to either of Claims 1 and 2, in which with the measured values collected downstream of the strip cooling section (8), a first, subordinate servo loop (11) is produced, which enables the target value for the cooling section (8) to be adjusted.

4. Rolling mill according to any one of Claims 1 to 3, in which with the measured values collected downstream of the strip cooling section (8), a second, subordinate servo loop (12) is produced, which enables the target value for the coiler (7) to be adjusted.

## Revendications

1. Train de laminoir avec un groupe finisseur (6), une unité de refroidissement de feuillard (8), une enrouleuse (7) et des dispositifs de mesure de la planéité du feuillard, respectivement disposés avant et après l'unité de refroidissement de feuillard, qui sont couplés à la régulation du groupe finisseur (6), de l'unité de refroidissement de feuillard (8) et de l'enrouleuse (7).

2. Train de laminoir selon la revendication 1, dans lequel, à la sortie du groupe finisseur (6), on enregistre et on analyse la planéité du feuillard (1), et on l'exploite pour commander les dernières cages du groupe finisseur, et ce faisant on la modifie par les valeurs de mesure de la mesure de planéité après l'unité de refroidissement de feuillard (8) et avant l'enrouleuse (7).

3. Train de laminoir selon la revendication 1 ou 2, dans lequel, avec les valeurs de mesure enregistrées après l'unité de refroidissement de feuillard (8), on produit une première boucle de régulation secondaire (11) qui permet une adaptation de la valeur de consigne pour la section de refroidissement (8).

4. Train de laminoir selon l'une des revendications 1 à 3, dans lequel, avec les valeurs de mesure enregistrées après l'unité de refroidissement de feuillard (8), on produit une deuxième boucle de régulation secondaire (12) qui permet une adaptation de la valeur de consigne pour la traction de l'enrouleuse (7).
